# FASCICULE DE BREVET EUROPEEN

(11) **EP 1 950 029 B1**
(45) Date de publication et mention de la délivrance du brevet: **07.04.2010**
(21) Numéro de dépôt: 08102501.7
(22) Date de dépôt: 06.02.2006
(51) Int. Cl.: B29C 49/56

(54) **Procédé de commande d' ouverture et de fermeture d' un moule de soufflage et dispositif de soufflage agence pour sa mise en oeuvre**
Steuerungsverfahren zum Öffnen und Schließen einer Blasform und zur Umsetzung des Verfahrens installierte Blasvorrichtung
Method of controlling the opening and closing of an extrusion blow mould and blowing device arranged to implement same

(30) Priorité: 08.02.2005 FR 0501269
(43) Date de publication de la demande: 30.07.2008
(62) Demande divisionnaire de: 06709259.3
(73) Titulaire: Sidel Participations, 76930 Octeville Sur Mer (FR)
(72) Inventeur: LEGALLAIS, Stéphane, 76930, OCTEVILLE-SUR-MER (FR)
(74) Mandataire: Cabinet Plasseraud

(56) Documents cités:
- FR-A- 2 737 436
- US-A- 4 313 720

## Description

La présente invention concerne des perfectionnements apportés dans le domaine du moulage de récipients en matière thermoplastique, notamment en PET, par soufflage ou étirage-soufflage d'ébauches chauffées dans un dispositif de moulage comportant au moins un moule de soufflage du type moule portefeuille avec au moins deux demi-moules écartables l'un de l'autre par rotation autour d'un axe commun d'articulation sous l'action de moyens d'entraînement.

Dans les dispositifs de moulage actuellement utilisés, les deux demi-moules s'ouvrent sensiblement symétriquement de part et d'autre du plan de joint, solution qui, sur le plan technologique, est facile à mettre en oeuvre. De leur côté, des moyens d'introduction ou de chargement destinés à introduire une ébauche dans le moule et des moyens d'extraction destinés à extraire un récipient moulé hors du moule sont agencés de manière que le déplacement de la pince de préhension, dans les deux cas, s'effectue approximativement dans le plan de joint du moule dans le moule ou au voisinage immédiat de celui-ci.

Au surplus, il est courant que le dispositif de moulage soit agencé sous forme d'un dispositif rotatif du type carrousel, en général équipé d'une pluralité de moules répartis sur sa périphérie, les plans de joint de ces moules étant sensiblement radiaux. De leur côté, les moyens d'introduction et les moyens d'extraction sont agencés sous forme de roues de transfert rotatives munies de pinces de préhension supportées par des bras approximativement radiaux. Le délai nécessaire aux moyens d'introduction pour introduire radialement l'ébauche dans le moule ou aux moyens d'extraction pour extraire radialement le récipient hors du moule nécessite que chaque pince de préhension accompagne le moule sur une portion de la trajectoire rotative de celui-ci, avec en complément un mouvement à composante radiale de la pince de préhension pour pénétrer dans le moule, respectivement sortir du moule, ces déplacements devant se dérouler sans interférence physique entre les bords des demi-moules et les pinces de préhension, l'ébauche ou respectivement le récipient.

Il en résulte un agencement relativement complexe des moyens d'introduction et des moyens d'extraction qui se présentent sous forme de roues de transfert équipées de bras de support des pinces de préhension qui sont animés d'un double mouvement de pivotement et radial, alors que les pinces de préhension peuvent de leur côté être animées d'un mouvement de pivotement sur l'extrémité de leur bras de support. Ces mouvements combinés sont obtenus mécaniquement par des ensembles complexes de galets coopérant avec des cames fixes, qui conduisent à un encombrement important de l'environnement du carrousel rotatif. De plus, ces ensembles sont le siège de frottements mécaniques importants ainsi que de phénomènes de rebondissements, qui limitent la vitesse de fonctionnement des installations.

Récemment, des structures simplifiées ont été proposées, qui font appel à un agencement de bras de support et de pince d'un seul tenant et animé d'un unique mouvement de pivotement, ce qui conduit à une simplification considérable des commandes et à un désencombrement notable des abords du carrousel tournant, tout en autorisant des vitesses de fonctionnement sensiblement accrues. Toutefois, cette simplification n'a pu être obtenue qu'au prix d'un mésalignement certes faible, mais cependant bien réel de l'axe de l'ébauche ou du récipient et du plan de joint du moule en début d'introduction, respectivement en fin d'extraction. Autrement dit, les mouvements de la pince de préhension lors de l'introduction de l'ébauche et lors de l'extraction du récipient s'effectuent maintenant selon des arcs de cercle, et non plus de façon strictement radiale. Il peut en résulter, au moins dans certaines configurations de mise en oeuvre, le risque d'une interférence physique entre le bord d'un des demi-moules et la pince de préhension et/ou l'ébauche, respectivement le récipient.

Certes, une solution aurait pu consister à augmenter l'angle d'ouverture des moules par rapport à ce qui est pratiqué. Toutefois, une telle solution ne peut pas donner satisfaction pour au moins deux raisons.

Une première raison réside dans le fait qu'ouvrir un moule d'un angle accru entraîne une augmentation du temps nécessaire pour les étapes d'ouverture et de fermeture du moule, ce qui va à l'encontre des exigences actuelles des utilisateurs qui requièrent des temps toujours plus réduits afin d'augmenter les cadences.

Une autre raison réside dans le fait qu'un angle accru d'ouverture des moules nécessite une place disponible plus grande et donc un écartement plus grand des moules répartis sur la périphérie du carrousel. Cela ne pourrait être obtenu qu'en augmentant le diamètre du carrousel, et donc son inertie, ce qui, là encore, irait à l'encontre des exigences actuelles des utilisateurs qui requièrent des machines toujours moins encombrantes et des cadences toujours plus élevées. En outre, un carrousel de plus grand diamètre serait plus coûteux.

Le document US 4 313 720 montre, à sa figure 1, un agencement de machine tournante équipée de moules de soufflage du type moules portefeuilles à ouverture asymétrique par rapport au plan de joint dirigé sensiblement radialement.

Le document FR 27 37 436 montre, à sa figure 1 un agencement de dispositif de moulage à moule portefeuilles unique à ouverture asymétrique par rapport au plan de joint.

La présente invention a pour but de proposer des solutions propres à éviter de telles interférences physiques, tout en faisant appel à des structures simples, peu complexes à mettre en oeuvre, et donc sensiblement peu onéreuses, capables d'autoriser une augmentation des cadences de fonctionnement.

A ces fins, selon un premier de ses aspects, l'invention propose un procédé pour, dans un dispositif de moulage rotatif du type carrousel se déplaçant selon un sens de rotation, commander l'ouverture et la fermeture d'un moule de soufflage du type moule portefeuille pour la fabrication de récipients en matière thermoplastique, notamment en PET, par soufflage ou étirage-soufflage d'ébauches chauffées, tel que mentionné dans le préambule de la revendication 1, lequel procédé se caractérise selon l'invention par les dispositions énoncées dans la partie caractérisante de la revendication 1.

Grâce à cette disposition, le demi-moule le plus ouvert laisse un passage plus important pour l'introduction d'un organe auxiliaire, tel qu'une pince de préhension, dans le moule, alors que, comme cela apparaîtra clairement plus loin, les moyens de réalisation sont simples. Autrement dit, la solution proposée par l'invention consiste à faire pivoter le plan de symétrie du moule de manière qu'il accompagne, autant que faire se peut, les moyens associés au moule pour amener l'ébauche ou emmener le récipient moulé de manière que ceux-ci se déplacent approximativement selon ce plan de symétrie, et non plus selon le plan de joint du moule qui, dans cette configuration, ne coïncide plus avec le plan de symétrie sauf dans la position de fermeture du moule.

On soulignera que, dans le contexte de l'invention, il est possible de conserver l'angle d'ouverture habituel du moule, autrement dit d'une part de ne pas modifier le temps nécessaire aux opérations d'ouverture et de fermeture du moule de sorte que la cadence de fonctionnement n'est pas affectée défavorablement et d'autre part de ne pas modifier l'encombrement nécessité par l'ouverture, puisqu'en fait un demi-moule se trouve davantage déplacé et l'autre moins que dans le cas des solutions connues jusqu'alors. Par ailleurs, la possibilité qui est offerte de mettre en oeuvre des moyens de déplacement des ébauches/récipients d'un type simplifié en combinaison avec le processus d'ouverture asymétrique du moule autorise un accroissement des cadences.

Au surplus, la solution proposée selon l'invention s'avère remarquablement intéressante par le fait que l'on conserve en partie les moyens d'entraînement prévus dans les dispositifs de moulage actuels, que les moules ne sont pas affectés par la mise en oeuvre de ces solutions, et qu'en définitive les modifications à apporter aux dispositifs de moulage actuels sont relativement restreintes.

De façon pratique, les dispositions conformes à l'invention sont mises en oeuvre dans le cas où le moule appartient à un dispositif de moulage rotatif du type carrousel. En particulier dans le cas où le plan de joint du moule s'étend sensiblement selon un rayon du dispositif de moulage, en vue d'une mise en oeuvre dans les machines actuelles de la Demanderesse eu égard aux agencements respectifs des moules et des moyens d'introduction des ébauches et des moyens d'extraction des récipients moulés, il devient intéressant que, par exemple pour l'introduction de l'ébauche dans le moule, ce soit le demi-moule arrière (considéré dans le sens de rotation du dispositif de moulage) qui ait une amplitude angulaire d'ouverture supérieure à celle du demi-moule avant ; de même que, par exemple pour l'extraction du récipient moulé, ce soit le demi-moule avant (considéré dans le sens de rotation du dispositif de moulage) qui ait une amplitude angulaire d'ouverture supérieure à celle du demi-moule arrière.

Selon un second de ses aspects, l'invention propose un dispositif de moulage pour la fabrication de récipients en matière thermoplastique, notamment en PET, par soufflage ou étirage-soufflage d'ébauches chauffées tel que mentionné dans le préambule de la revendication 4, lequel dispositif de moulage se caractérise, étant agencé conformément à l'invention, par les dispositions énoncées dans la partie caractérisante de la revendication 4.

Dans un mode de réalisation concret, on peut prévoir que les moyens d'entraînement comprennent un bras d'entraînement d'étendue approximativement perpendiculaire au plan de joint et que ce bras d'entraînement possède une première extrémité articulée sur un axe fixe et une seconde extrémité opposée articulée sur ledit axe commun des susdites bielles.

Les dispositions conformes à l'invention trouvent une application dans un dispositif de moulage constitué sous forme d'un dispositif rotatif du type carrousel se déplaçant selon un sens de rotation. Dans le cas où le plan de joint du moule s'étendant sensiblement radialement, pour l'équipement de la plupart des dispositifs de moulage de la Demanderesse, il est avantageux, pour l'introduction d'une ébauche dans le moule, que ce soit le demi-moule arrière (considéré dans le sens de rotation du carrousel) qui ait un angle d'ouverture, par rapport au plan de joint, qui soit supérieur à celui de l'autre demi-moule ; de même il est alors avantageux, pour l'extraction d'un récipient moulé hors du moule, que ce soit le demi-moule avant (considéré dans le sens de déplacement du carrousel) qui ait un angle d'ouverture, par rapport au plan de joint, qui soit supérieur à celui de l'autre demi-moule.

L'invention sera mieux comprise à la lecture de la description détaillée qui suit de certains modes de réalisations préférés donnés uniquement à titre d'exemples nullement limitatifs. Dans cette description, on se réfère aux dessins annexés sur lesquels:
- la figure 1A est une représentation très schématique, en vue de dessus, d'un mode de réalisation d'un dispositif de moulage agencé conformément à l'invention ;
- les figures 1B et 1C sont des représentations analogues à celle de la figure 1A montrant le moule, dans le cas où il appartient à un dispositif rotatif du type carrousel, dans deux positions fonctionnelles différentes ;
- la figure 2A est une représentation très schématique, en vue de dessus, d'un autre mode de réalisation d'un dispositif de moulage agencé conformément à l'invention ; et
- les figures 2B et 2C sont des représentations analogues à celle de la figure 2A montrant le moule, dans le cas où il appartient à un dispositif rotatif du type carrousel, dans deux positions fonctionnelles différentes.

Dans les dessins annexés, le dispositif de moulage visé par l'invention est représenté de façon très schématique et seules les parties ou éléments utiles à la compréhension de l'invention sont illustrés, étant entendu que le dispositif de moulage peut avoir toute conformation compatible avec les dispositions proposées dans le cadre de l'invention.

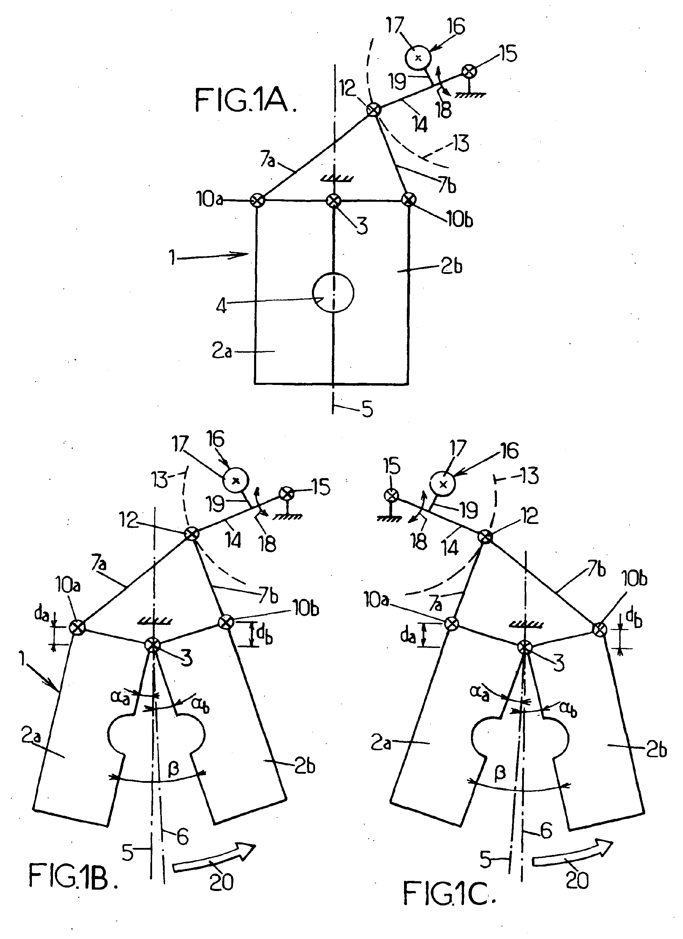

Ainsi, l'invention vise à perfectionner la commande d'ouverture et de fermeture d'un moule de soufflage, illustré en vue de dessus à la figure 1A en position de fermeture et désigné dans son ensemble par la référence 1, du type moule portefeuille, destiné à la fabrication de récipients en matière thermoplastique, notamment en PET, par un processus de soufflage ou d'étirage-soufflage d'ébauches chauffées. Un tel moule 1 comporte au moins deux demi-moules 2a, 2b qui sont écartables angulairement l'un de l'autre par rotation autour d'un axe 3 commun fixe d'articulation. Les demi-moules comportent des empreintes creuses respectives qui, ensemble, définissent une cavité 4 (dont seule l'ouverture supérieure est visible sur la figure lA) de moulage des récipients ou du corps des récipients (dans ce cas, le moule comporte en outre une troisième partie ou fond de moule comportant une empreinte creuse correspondant au fond du récipient à fabriquer).

Dans la position de fermeture représentée à la figure 1A, les faces accolées des deux demi-moules 2a, 2b définissent un plan de joint 5 qui est matérialisé par un trait mixte.

Des moyens d'actionnement, qui en général font intervenir des bielles accouplées respectivement aux deux demi-moules, permettent de déplacer les demi-moules entre leur position de fermeture et leur position d'ouverture et de les maintenir dans ces positions. Des moyens de commande, en général sous forme de galets et de cames, permettent de commander ces moyens d'actionnement en fonction des séquences de fonctionnement. Des exemples concrets en seront donnés plus loin en relation avec certains modes de réalisation préférés de l'invention.

Dans une configuration traditionnelle de moule du type précité, les demi-moules occupent des positions symétriques par rapport au plan de joint, quelle que soit leur position fonctionnelle ; autrement dit, ils sont déplacés symétriquement de part et d'autre du plan de joint.

Pour faciliter l'introduction des ébauches de récipient (notamment des préformes) lors du chargement des moules et l'extraction des récipients terminés lors du déchargement des moules, en particulier à l'aide de bras de transfert de conception simplifiée qui possèdent moins de degrés de liberté que les bras utilisés jusqu'à présent (et dont notamment les pinces terminales ne se déplacent pas strictement dans l'axe du plan de joint entre les deux demi-moules), mais qui en revanche sont plus simples à commander et moins coûteux, l'invention propose, comme illustré à la figure 1B, que les deux demi-moules 2a, 2b soient ouverts de façon asymétrique de part et d'autre du plan de joint 5, ce grâce à quoi le demi-moule le plus ouvert laisse, par rapport au plan de joint 5, un passage plus important pour l'introduction d'un organe auxiliaire, tel qu'un bras de préhension, dans le moule. Ainsi, dans l'exemple de la figure 1B, l'angle α_{b} d'ouverture du demi-moule 2b par rapport au plan de joint 5 est supérieur à l'angle αₐ d'ouverture du demi-moule 2a par rapport au plan de joint, tandis que c'est l'inverse dans l'exemple de la figure 1C.

Cependant, il est souhaitable de conserver le même angle β d'ouverture mutuelle des deux demi-moules 2a, 2b que dans les moules actuels, de sorte que la solution proposée par l'invention est équivalente à un pivotement du plan bissecteur 6 (schématisé par un trait mixte à double point sur la figure 1B) des deux demi-moules 2a, 2b. Cette disposition permet de conserver les mêmes paramètres, et notamment le même temps, de commande d'ouverture et de fermeture du moule qu'actuellement, de sorte que les conditions de fonctionnement du moule ne sont pas modifiées par la mise en oeuvre des dispositions de l'invention.

Différentes solutions techniques sont envisageables pour provoquer le déplacement asymétrique souhaité des deux demi-moules. Toutes les solutions proposées ci-après font appel à des moyens d'actionnement des demi-moules qui font intervenir deux bielles accouplées respectivement aux deux demi-moules.

Dans ces conditions, un mode de réalisation, qui peut être préféré en raison des économies de matériels et de place qu'il procure, fait appel (fig. 1A) à deux bielles 7a, 7b qui sont accouplées l'une à l'autre de façon articulée en 12 à leur extrémité libre, selon une disposition classique dans ce type de dispositif. A cette différence près qu'ici l'une des bielles (en l'occurrence la bielle 7b) est réalisée plus courte que l'autre (ici la bielle 7a).

Au surplus, la trajectoire (désignée par la référence 13) de l'axe 12 commun est extérieure au plan de joint, de sorte que le demi-moule 2b (sur la figure 1B) entraîné par la bielle 7b la plus courte possède un angle d'ouverture α_{b}, par rapport au plan de joint 5, qui est supérieur à celui αₐ de l'autre demi-moule 2a comme montré à la figure 1B.

Dans cette configuration, des moyens d'entraînement dudit axe 12 commun sont propres à déplacer ce dernier sur une trajectoire 13 s'étendant approximativement parallèlement au plan de joint 5, comme représenté à la figure 1B ; la trajectoire 13 de l'axe 12 commun est extérieure au plan de joint 5, le demi-moule 2b entraîné par la bielle 7b la plus courte ayant un angle d'ouverture α_{b}, par rapport au plan de joint, qui est supérieur à celui αₐ de l'autre demi-moule 2a. De préférence, les moyens d'entraînement comprennent un bras 14 d'entraînement d'étendue approximativement transversale au plan de joint 5 et ce bras 14 d'entraînement possède une première extrémité articulée sur un axe 15 fixe et une seconde extrémité opposée articulée sur ledit axe 12 commun des susdites bielles 7a, 7b, de sorte que la trajectoire 13 de l'axe 12 est un arc de cercle qui s'étend, globalement, approximativement parallèlement au plan de joint 5.

Pour ce qui concerne les moyens de commande 16 pour permettre le déplacement en rotation du bras 14, il peut s'agir par exemple d'un galet 17 supporté par un bras 19 secondaire solidaire du bras 14 et propre à coopérer avec une came (non représentée) pour provoquer un déplacement (flèche 18) en rotation du bras 14 autour de l'axe 15.

Dans l'agencement proposé avec deux bielles 7a, 7b de longueurs inégales, le déplacement de l'axe 12 commun sur la trajectoire 13 provoque des rotations des deux demi-moules 2a, 2b respectivement qui sont simultanées, mais d'amplitudes angulaires différentes : le déplacement angulaire du demi-moule accouplé à la bielle la plus courte est supérieur au déplacement angulaire du demi-moule accouplé à la bielle la plus longue. Dans l'exemple de la figure 1B, l'amplitude angulaire α_{b} du déplacement curviligne du demi-moule 2b accouplé à la bielle 7b la plus courte est supérieure à celle αₐ du demi-moule 2a accouplé à la bielle 7a la plus longue.

Dans le cas où, inversement, on souhaite que ce soit le demi-moule 2a qui présente un déplacement angulaire αₐ supérieur à celui α_{b} du demi-moule 2b, il suffit, comme illustré à la figure 1C, d'inverser la position du bras 14 d'entraînement, de la bielle la plus courte qui devient la bielle 7a, ainsi que la position de la trajectoire 13 de l'axe 12 par rapport au plan de joint 5.

On soulignera que, dans ce mode de réalisation, les agencements du moule, du bras d'actionnement 14 et des moyens de commande 16 demeurent approximativement identiques à ce qu'ils sont dans la configuration classique actuelle, et que l'aménagement apporté par l'invention porte sur le raccourcissement de l'une des deux bielles.

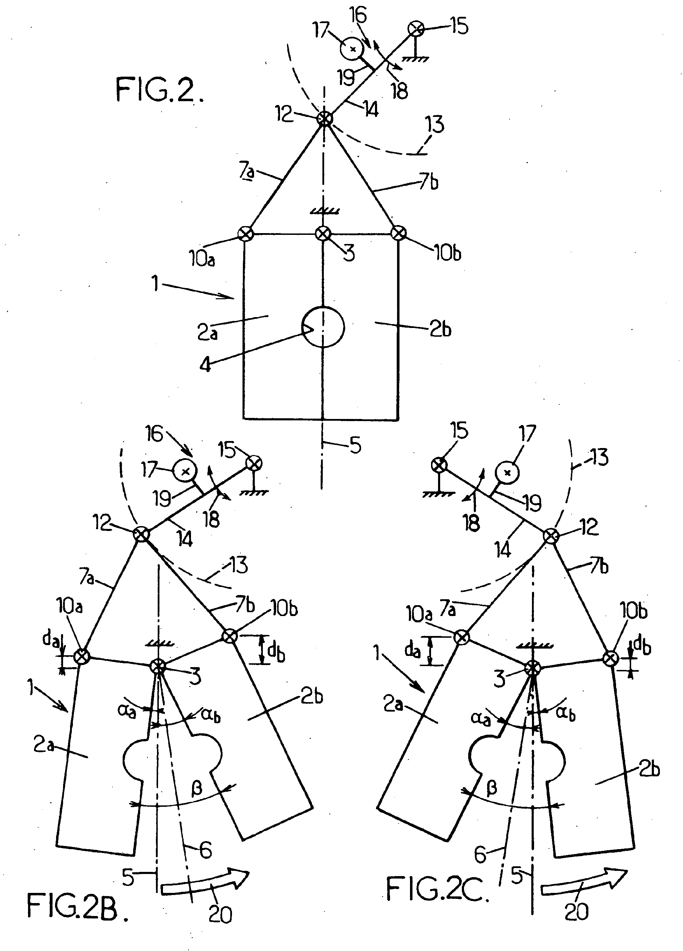

Un autre mode de réalisation, illustré à la figure 2A, consiste à mettre en oeuvre deux bielles 2a, 2b qui sont de même longueur et qui sont accouplées l'une à l'autre de façon articulée sur un axe 12 à leur extrémité libre, selon une disposition classique dans ce type de dispositif.

Au surplus, la trajectoire (désignée par la référence 13) de l'axe 12 commun est transversale au plan de joint. Autrement dit, l'axe 12 commun est déplaçable selon une direction inclinée par rapport au plan de joint, la valeur de cette inclinaison étant en relation avec l'asymétrie d'ouverture des deux demi-moules 2a, 2b de part et d'autre du plan de joint 5. Ainsi, lorsque l'axe 12 commun aux deux bielles 2a, 2b est déplacé sur sa trajectoire 13 vers la gauche sur la figure 2B, le demi-moule 2b est entraîné par la bielle 7b avec un angle d'ouverture α_{b}, par rapport au plan de joint 5, qui est supérieur à celui αₐ de l'autre demi-moule 2a.

Dans cette configuration, des moyens d'entraînement dudit axe 12 commun sont propres à déplacer ce dernier sur une trajectoire 13 s'étendant transversalement au plan de joint 5, comme représenté à la figure 2B ; la trajectoire 13 de l'axe 12 commun intersecte le plan de joint 5. De préférence, les moyens d'entraînement comprennent un bras d'entraînement 14 d'étendue approximativement transversale au plan de joint 5 et ce bras d'entraînement 14 possède une première extrémité articulée sur un axe 15 fixe et une seconde extrémité opposée articulée sur ledit axe commun 12 des susdites bielles 7a, 7b, de sorte que la trajectoire 13 de l'axe 12 est un arc de cercle qui intersecte le plan de joint 5.

Pour ce qui concerne les moyens de commande 16 pour le déplacement en rotation du bras 14, il peut s'agir par exemple, là encore, d'un galet 17 supporté par un bras 19 secondaire solidaire du bras 14 et propre à coopérer avec une came (non représentée) pour provoquer un déplacement (flèche 18) en rotation du bras 14 autour de l'axe 15.

Dans le cas où, inversement, on souhaite que ce soit le demi-moule 2a qui présente un déplacement angulaire αₐ supérieur à celui α_{b} du demi-moule 2b, il suffit, comme illustré à la figure 2C, d'inverser la position du bras 14 d'entraînement et la position de la trajectoire 13 de l'axe 12 par rapport au plan de joint 5.

On soulignera que, dans cet autre mode de réalisation, le moule et les bielles conservent leur structure classique actuelle et que l'aménagement apporté par l'invention concerne le bras 14 d'entraînement et les moyens de commande 16 de manière telle que la trajectoire 13 de l'axe 12 s'étende transversalement au plan de joint 5.

Quel que soit le mode de réalisation envisagé, les dispositions conformes à l'invention qui viennent d'être exposées en détail en regard des figures 1A-1C et 2A-2C peuvent trouver une application tout particulièrement intéressante dans les dispositifs de moulage constitués sous forme de dispositifs rotatifs du type carrousel, qui regroupent plusieurs dispositifs de moulage répartis périphériquement sur une embase tournante. Des carrousels ainsi agencés sont bien connus dans l'état de la technique et il n'y a pas lieu de les décrire de façon détaillée ici. Les figures 1A-1C et 2A-2C n'en montrent aucun élément structurel et seul est indiqué l'unique caractéristique utile dans le contexte de l'invention, à savoir le sens de rotation du carrousel schématisé par une flèche 20. On soulignera également qu'en général le plan de joint 5 de chaque moule 1 du carrousel s'étend sensiblement radialement (le centre de rotation du carrousel n'est pas montré sur les figures).

Dans ce contexte, on peut prévoir que c'est le demi-moule arrière (considéré dans le sens 20 de rotation du carrousel), à savoir le demi-moule 2a, qui a un angle d'ouverture αₐ, par rapport au plan de joint 5, qui est supérieur à celui α_{b} de l'autre demi-moule 2b. Cette configuration est montrée sur les figures 1C et 2C. Elle peut être utile notamment pour faciliter le chargement du moule avec une ébauche (telle qu'une préforme) à partir d'une roue de chargement équipée de bras mobiles de chargement, en particulier de bras à structure simplifiée dont la pince terminale de préhension peut ne pas être déplacée, au moins sur une partie de son parcours, de façon exactement radiale à l'intérieur du moule.

On peut aussi prévoir, à l'inverse, que c'est le demi-moule avant (considéré dans le sens 20 de rotation du carrousel), à savoir le demi-moule 2b, qui a un angle d'ouverture α_{b}, par rapport au plan de joint 5, qui est supérieur à celui αₐ de l'autre demi-moule 2a. Cette configuration est illustrée sur les figures 1B et 2B. Elle peut être utile notamment pour faciliter l'extraction d'un récipient achevé hors du moule, par exemple pour le saisir et le mouvoir à l'aide d'un bras de déchargement d'une roue de déchargement, en particulier à l'aide d'un bras à structure simplifiée dont la pince terminale de préhension peut ne pas être déplacée, au moins sur une partie de son parcours, de façon exactement radiale à l'intérieur du moule.

Bien entendu, dans le dernier mode de réalisation, les deux dispositions précédentes peuvent être combinées de façon séquentielle de manière que chaque moule du carrousel subisse, en deux positions décalées angulairement de la course rotative du carrousel, une ouverture avec le demi-moule arrière plus ouvert pour le chargement de l'ébauche, puis une ouverture avec le demi-moule avant plus ouvert pour l'extraction du récipient terminé. A cette fin, il suffit que chaque bras 14 d'entraînement soit équipé de deux galets 17 distincts agencés comme montré sur les figure 2C et 2B et propres à coopérer fonctionnellement avec deux cames respectives distinctes.

## Revendications

1. Procédé pour, dans un dispositif de moulage rotatif du type carrousel se déplaçant selon un sens (20) de rotation, commander l'ouverture et la fermeture d'un moule de soufflage du type moule portefeuille pour la fabrication de récipients en matière thermoplastique, notamment en PET, par soufflage ou étirage-soufflage d'ébauches chauffées, ledit moule (1) comportant au moins deux demi-moules (2a, 2b) écartables l'un de l'autre par rotation autour d'un axe (3) commun fixe d'articulation de façon asymétrique de part et d'autre de leur plan de joint (5), les deux demi-moules (2a, 2b) étant commandés de façon commune par l'intermédiaire de deux bielles (7a, 7b) respectives de sensiblement mêmes longueurs et ayant des premières extrémités accouplées à rotation par des liaisons (10a, 10b) aux demi-moules (2a, 2b) respectifs et des secondes extrémités accouplées l'une à l'autre à rotation sur un axe (12) commun déplaçable,
**caractérisé en ce que** ledit axe (12) commun est déplaçable selon une trajectoire (13) inclinée par rapport au plan de joint (5), l'inclinaison de la trajectoire (13) étant en relation avec l'asymétrie d'ouverture des deux demi-moules (2a, 2b) de part et d'autre du plan de joint (5).

2. Procédé selon la revendication 1, le plan de joint (5) du moule s'étendant sensiblement selon un rayon du dispositif de moulage, **caractérisé en ce que** le demi-moule arrière (considéré dans le sens (20) de rotation du dispositif de moulage) a une amplitude angulaire d'ouverture, par rapport au plan de joint (5), qui est supérieure à celle du demi-moule avant.

3. Procédé selon la revendication 1, le plan de joint (5) du moule s'étendant sensiblement selon un rayon du dispositif de moulage, **caractérisé en ce que** le demi-moule avant (considéré dans le sens (20) de rotation du dispositif de moulage) a une amplitude angulaire d'ouverture, par rapport au plan de joint, qui est supérieure à celle du demi-moule arrière.

4. Dispositif de moulage rotatif du type carrousel se déplaçant selon un sens (20) de rotation pour la fabrication de récipients en matière thermoplastique, notamment en PET, par soufflage ou étirage-soufflage d'ébauches chauffées, ledit dispositif de moulage comportant au moins un moule (1) de soufflage du type moule portefeuille avec au moins deux demi-moules (2a, 2b) écartables l'un de l'autre par rotation autour d'un axe (12) commun d'articulation sous l'action de moyens d'actionnement qui sont agencés de manière telle que les deux demi-moules possèdent des angles (αₐ, α_{b}) respectifs d'ouverture de part et d'autre du plan de joint (5) du moule (1) qui ne soient pas égaux, lesquels moyens d'actionnement comprennent deux bielles (7a, 7b) ayant sensiblement la même longueur et ayant des premières extrémités respectives raccordées à rotation par des liaisons (10a, 10b) respectivement aux deux demi-moules (2a, 2b) et des secondes extrémités opposées raccordées à rotation sur un axe (12) commun, des moyens de commande (16) étant fonctionnellement associés audit axe (12) commun pour le déplacer, ledit dispositif de moulage étant agencé pour la mise en oeuvre du procédé selon l'une quelconque des revendications 1 à 3,
**caractérisé en ce que** lesdits moyens de commande (16) de l'axe (12) commun sont agencés pour entraîner ledit axe commun sur une trajectoire (13) s'étendant approximativement transversalement au plan de joint (5) et inclinée par rapport à celui-ci, l'inclinaison de cette trajectoire étant en relation avec l'asymétrie d'ouverture des deux demi-moules (2a, 2b) respectifs.

5. Dispositif de moulage selon la revendication 4, **caractérisé en ce que** les moyens de commande (16) comprennent un bras (14) d'entraînement d'étendue approximativement transversale au plan de joint (5), mais inclinée par rapport à celui-ci, et **en ce que** ce bras (14) d'entraînement possède une première extrémité articulée sur un axe (15) fixe et une seconde extrémité opposée articulée sur ledit axe (12) commun des susdites bielles (7a, 7b).

6. Dispositif de moulage selon la revendication 4 ou 5, le plan de joint (5) du moule (1) s'étendant sensiblement radialement, **caractérisé en ce que** c'est le demi-moule arrière (considéré dans le sens (20) de rotation du carrousel) qui a un angle d'ouverture, par rapport au plan de joint, qui est supérieur à celui de l'autre demi-moule.

7. Dispositif de moulage selon la revendication 4 ou 5, le plan de joint (5) du moule (1) s'étendant sensiblement radialement, **caractérisé en ce que** c'est le demi-moule avant (considéré dans le sens (20) de rotation du carrousel) qui a un angle d'ouverture, par rapport au plan de joint, qui est supérieur à celui de l'autre demi-moule.

## Claims

1. A method for, in a rotary molding device of the carousel type moving in a direction of rotation (20), controlling the opening and closing of a blow-molding mold of the hinged mold type for the manufacture of thermoplastic containers, particularly PET containers, by blow-molding or stretch-blow-molding heated parisons, said mold (1) comprising at least two mold halves (2a, 2b) that can be separated from one another by rotation about a fixed common axle (3) of articulation asymmetrically on each side of their parting plane (5), said two mold halves (2a, 2b) being controlled jointly via two respective link rods (7a, 7b) of substantially the same length and having first ends coupled rotationally by links (10a, 10b) to said respective mold halves (2a, 2b) and second ends coupled rotationally to one another at a movable common axle (12),
**characterized in that** said common axle (12) can move in a path (13) that is inclined with respect to the parting plane (5), the angle of inclination of the path (13) being related to the asymmetry of opening of said two mold halves (2a, 2b) on each side of the parting plane (5).

2. The method as claimed in claim 1, the parting plane of the mold (5) running substantially along a radius of the molding device, **characterized in that** the rear mold half (considered in the direction (20) in which the molding device rotates) has an angle of opening, with respect to said parting plane (5), which is greater than that of the front mold half.

3. The method as claimed in claim 1, the parting plane of the mold (5) running substantially along a radius of the molding device, **characterized in that** the front mold half (considered in the direction (20) in which the molding device rotates) has an angle of opening, with respect to said parting plane, which is greater than that of the rear mold half.

4. A molding device rotary device of the carousel type moving in a direction of rotation (20) for manufacturing thermoplastic containers, particularly PET containers, by blow-molding or stretch-blow-molding heated parisons, said molding device comprising at least one blow-molding mold (1) of the hinged mold type with at least two mold halves (2a, 2b) which can be separated from one another by rotation about a common axle (3) of articulation under the action of actuating means are designed in such a way that the two mold halves have respective angles (α_{*a*,}α*_{b}*)of opening on each side of the parting plane (5) of said mold (1) which are not equal, the actuating means comprise two link rods (7a, 7b) of substantially the same length and having respective first ends rotationally connected by links (10a, 10b) to the two mold halves (2a, 2b) respectively and opposite second ends rotationally connected at a common axle (12), control means (16) being functionally associated with said common axle (12) in order to move it, said molding device being designed for implementing the method as claimed in anyone of claims 1 to 3,
**characterized in that** said control means (16) for controlling the common axle (12) are designed to drive said common axle in a path (13) running approximately transversely to the parting plane (5) and inclined at an angle with respect thereto, the angle of inclination of this path being related to the asymmetry of opening of the two respective mold halves (2a, 2b).

5. The molding device as claimed in claim 4, **characterized in that** the control means (16) comprise a drive arm (14) running approximately transversely to the parting plane (5), but inclined at an angle with respect thereto, and wherein said drive arm (14) has a first end articulated to a fixed axle (15) and an opposite second end articulated to said axle common (12) to the aforesaid link rods (7a, 7b).

6. The molding device as claimed in claim 4 or 5, the parting plane (5) of the mold (1) running substantially radially, **characterized in that** it is the rear mold half (considered in the direction (20) in which the carousel rotates) which has an angle of opening, with respect to the parting plane, which is greater than that of the other mold half.

7. The molding device as claimed in claims 4 or 5, the parting plane (5) of the mold (1) running substantially radially, **characterized in that** it is the front mold half (considered in the direction (20) in which the carousel rotates) which has an angle of opening, with respect to the parting plane, which is greater than that of the other mold half.

## Patentansprüche

1. Verfahren zum Steuern des Öffnens und Schließens einer zusammengeklappten Blasform zur Herstellung von Behältern aus einem thermoplastischen Werkstoff, insbesondere PET, durch Blasformen oder Streckblasen von erwärmten Vorformlingen, in einer sich drehenden Karussell-Formvorrichtung, die sich in einer Drehrichtung (20) bewegt, wobei die Form (1) mindestens zwei Formhälften (2a, 2b) aufweist, die sich durch Drehen um eine gemeinsame feste Gelenkachse (3) auf beiden Seiten von ihrer Verbindungsebene (5) asymmetrisch voneinander entfernen können, wobei die beiden Formhälften (2a, 2b) gemeinsam gesteuert werden über zwei entsprechende Pleuelstangen (7a, 7b) von ungefähr derselben Länge, die erste Enden aufweisen, die drehbar über Verbindungen (10a, 10b) mit den jeweiligen Formhälften (2a, 2b) verbunden sind, und zweite Enden aufweisen, die drehbar an einer gemeinsamen beweglichen Achse (12) miteinander verbunden sind,
**dadurch gekennzeichnet, dass** die gemeinsame Achse (12) entlang einer in Bezug auf die Verbindungsebene (5) geneigten Bahn (13) bewegt werden kann, wobei die Neigung der Bahn (13) mit der Öffnungsasymmetrie der beiden Formhälften (2a, 2b) auf beiden Seiten der Verbindungsebene (5) in Beziehung steht.

2. Verfahren nach Anspruch 1, wobei die Verbindungsebene (5) der Form im Wesentlichen entlang eines Radius der Formvorrichtung verläuft, **dadurch gekennzeichnet, dass** die hintere Formhälfte (in der Drehrichtung (20) der Formvorrichtung betrachtet) eine Öffnungswinkelgröße zur Verbindungsebene (5) aufweist, die größer ist als die der vorderen Formhälfte.

3. Verfahren nach Anspruch 1, wobei die Verbindungsebene (5) der Form im Wesentlichen entlang eines Radius der Formvorrichtung verläuft, **dadurch gekennzeichnet, dass** die vordere Formhälfte (in der Drehrichtung (20) der Formvorrichtung betrachtet) eine Öffnungswinkelgröße zur Verbindungsebene aufweist, die größer ist als die der hinteren Formhälfte.

4. Drehbare Karussell-Formvorrichtung, die sich in einer Drehrichtung (20) bewegt, zur Herstellung von Behältern aus einem thermoplastischen Werkstoff, insbesondere PET, durch Blasformen oder Streckblasen von erwärmten Vorformlingen, wobei die Formvorrichtung mindestens eine zusammengeklappte Blasform (1) mit mindestens zwei Formhälften (2a, 2b) aufweist, die sich durch Drehen um eine gemeinsame Gelenkachse (3) unter dem Einfluss von Betätigungsmitteln voneinander entfernen können, die derart angeordnet sind, dass die beiden Formhälften auf beiden Seiten der Verbindungsebene (5) der Form (1) entsprechende Öffnungswinkel (αₐ, α_{b}) besitzen, die ungleich sind, wobei die Betätigungsmittel zwei Pleuelstangen (7a, 7b) von ungefähr derselben Länge umfassen, die entsprechende erste Enden aufweisen, die drehbar über Verbindungen (10a, 10b) jeweils mit den beiden Formhälften (2a, 2b) verbunden sind, und gegenüberliegende zweite Enden aufweisen, die drehbar an einer gemeinsamen Achse (12) verbunden sind, wobei Steuermittel (16) funktionell mit der gemeinsamen Achse (12) assoziiert sind, um sie zu bewegen, wobei die Formvorrichtung zur Realisierung des Verfahrens nach einem der Ansprüche 1 bis 3 angeordnet ist,
**dadurch gekennzeichnet, dass** die Steuermittel (16) für die gemeinsame Achse (12) zur Führung der gemeinsamen Achse auf einer Bahn (13) angeordnet sind, die in etwa quer zur Verbindungsebene (5) verläuft und zu dieser geneigt ist, wobei die Neigung dieser Bahn mit der Öffnungsasymmetrie der beiden jeweiligen Formhälften (2a, 2b) in Beziehung steht.

5. Formvorrichtung nach Anspruch 4, **dadurch gekennzeichnet, dass** die Steuermittel (16) einen Führungsarm (14) umfassen, der in etwa quer zur Verbindungsebene (5), jedoch geneigt zu dieser verläuft, und dadurch, dass dieser Führungsarm (14) ein erstes Ende besitzt, das gelenkig an einer feststehenden Achse (15) angebracht ist, und ein zweites gegenüberliegendes Ende, das gelenkig an der gemeinsamen Achse (12) der Pleuelstangen (7a, 7b) angebracht ist.

6. Formvorrichtung nach Anspruch 4 oder 5, wobei die Verbindungsebene (5) der Form (1) im Wesentlichen radial verläuft, **dadurch gekennzeichnet, dass** die hintere Formhälfte (in der Drehrichtung (20) des Karussells betrachtet) einen Öffnungswinkel zur Verbindungsebene aufweist, der größer ist als der der anderen Formhälfte.

7. Formvorrichtung nach Anspruch 4 oder 5, wobei die Verbindungsebene (5) der Form (1) im Wesentlichen radial verläuft, **dadurch gekennzeichnet, dass** die vordere Formhälfte (in der Drehrichtung (20) des Karussells betrachtet) einen Öffnungswinkel zur Verbindungsebene aufweist, der größer ist als der der anderen Formhälfte.
